# EUROPÄISCHE PATENTSCHRIFT

(11) **EP 2 345 054 B1**
(45) Veröffentlichungstag und Bekanntmachung des Hinweises auf die Patenterteilung: **24.10.2012**
(21) Anmeldenummer: 09778314.6
(22) Anmeldetag: 03.09.2009
(51) Int. Cl.: H01H 23/16, H01H 47/00, H03K 17/97, B60Q 1/14

(54) **SCHALTERMODUL MIT SENSORMITTELN ZUR ERKENNUNG VON SCHALTPOSITIONEN**
SWITCH MODULE HAVING SENSORS FOR DETECTING SWITCH POSITIONS
MODULE DE COMMUTATION MUNI DE MOYENS DE DETECTION POUR L' IDENTIFICATION DE POSITIONS DE COMMUTATION

(30) Priorität: 30.09.2008 DE 102008049679
(43) Veröffentlichungstag der Anmeldung: 20.07.2011
(73) Patentinhaber: Valeo Schalter und Sensoren GmbH, 74321 Bietigheim-Bissingen (DE)
(72) Erfinder: STAUDE, Sascha, 71638 Ludwigsburg (DE); MUELLER, Stefan, 97944 Boxberg (DE); ELMERING, Kai, 74321 Bietigheim-Bissingen (DE)
(86) Internationale Anmeldenummer: PCT/EP2009/006396
(87) Internationale Veröffentlichungsnummer: WO 2010/037458

(56) Entgegenhaltungen:
- DE-A1- 10 252 379
- DE-A1- 19 712 869
- DE-A1- 19 918 566
- DE-A1-102005 012 883
- DE-A1-102005 018 289
- DE-A1-102006 012 890
- DE-A1-102006 054 412
- DE-B3- 10 319 192
- FR-A- 2 823 820
- US-A- 5 259 262

## Beschreibung

### Stand der Technik

Die Erfindung betrifft ein Schaltermodul mit Sensormitteln zur Erkennung von Schaltpositionen, insbesondere einen Lenkstockschalter zur Auswahl vorgegebener Funktionen bei einem Fahrzeug, nach der Gattung des Hauptanspruchs.

Bei einer Verwendung in Fahrzeugen werden solche Schaltermodule als Lenkstockschalter, z. B. an einem Blinker- oder Scheibenwischerhebel etc., vorzugsweise zur Auswahl einer Vielzahl von Funktionen beispielsweise als Vierquadrantenschalter, als Wippenschalter oder als Gangwahlhebel eingesetzt. Hierbei ist eine genaue Positionserkennung des Schalthebels und die daraus jeweils folgende Schalterstellung mit geeigneten Sensormitteln zu detektieren, wobei sowohl rotatorische als auch lineare Bewegungen erfasst werden sollten.

Die Schalterstellungen der Betätigungselemente oder -hebel werden in derzeit üblicher Weise entweder über elektromechanische Kontaktsysteme (Kontaktschieber, Schleifer etc.), mittels digitaler magnetischer Systeme bzw. mit Hall-Elementen oder durch digitale optoelektronische Systeme detektiert.

Aus der DE 102 52 379 A1 ist es beispielsweise bekannt, dass eine Schalteinheit des Lenkstockschalters mit Schaltkontakten derart gekoppelt ist, dass bei einer Bewegung des Schalthebels die Schaltkontakte je nach Schalterstellung vorgegebene Schaltkontakte eines Leiterbahnträgers kontaktieren und damit die gewünschten Funktionen in einem Fahrzeug ausgelöst werden.

Darüber ist aus der DE 10 2005 018 289 A1 für sich gesehen bekannt, dass das mit dem Schalthebel zu betätigende Schaltmittel polarisierte Magnetabschnitte aufweist, deren Lage sich bei einer Betätigung des Schalthebels verändert. Mit geeigneten Magnetfeldsensoren und einer daran angeschlossenen Elektronikeinheit können somit aus der Betätigung des Schalthebels Steuersignale gewonnen werden und damit vorgegebene Funktionen im Fahrzeug gesteuert werden.

DE 10 2006 054 412 wird als nächstliegender Stand der Technik betrachtet und offenbart die Merkmale des Oberbegriffs des Patentsanspruchs 1.

### Darstellung der Erfindung

Die Erfindung betrifft ein Schaltermodul mit Sensormitteln zur Erkennung von Schaltpositionen, bei dem ein Schalthebel in mindestens einem Freiheitsgrad bewegbar und die Bewegung mit den Sensormitteln detektierbar ist. Der Erfindung liegt die Aufgabe zugrunde, eine erhöhte Sicherheit bei der Hebelpositionserkennungen eines Schalthebels zu erreichen.

Gemäß der Erfindung nach Anspruch 1 werden dazu mehrere Sensormittel miteinander redundant in vorteilhafter Weise kombiniert und es werden mehrere Einheiten zur Detektion der Schaltstellungen parallel eingesetzt. Um die Sicherheit und die Diversität zu erhöhen, bestehen die Sensormittel dabei aus einer redundanten Kombination von berührungslos arbeitenden Sensormitteln und mechanisch direkt kontaktierbaren Sensormitteln, die digitale und/oder analoge Signalauswertungen ermöglichen. Hierbei können die direkt kontaktierbaren Sensormittel durch digitale magnetische oder optoelektronische Sensormittel ersetzt werden.

Vorteilhaft ist die Erfindung insbesondere, wenn die berührungslos arbeitenden Sensormittel aus einem durch eine Bewegung des Schalthebels rotatorisch bewegten Magneten und einem ortsfesten Magnetfeldsensor bestehen, wobei der Magnet derart polarisiert ist, dass die rotatorische Bewegung des Magneten zu einer Richtungs- und/oder Feldstärkeänderung im Magnetfeldsensor führt.

Gemäß der Erfindindung nach Anspruch 1 ist es auch vorgesehen, dass die mechanisch direkt kontaktierbaren Sensormittel aus auf einer ortsfesten Leitplatte angebrachten Leiterbahnen und aus einem durch eine Bewegung des Schalthebels rotatorisch bewegten Schleifkontakten bestehen, wobei vorgegebene Geometrien der Leiterbahnen bei bestimmten Stellungen des Schalthebels durch die Schleifkontakte kontaktierbar sind.

Der Schalthebel kann dabei in besonders vorteilhafter Weise um eine erste Achse drehbar gelagert sein und es sind Sensormittel auf einer zweiten drehbaren Achse angeordnet, die mit der ersten Achse rotatorisch gekoppelt ist. Die Übersetzung von der ersten zur zweiten Achse ist dabei vorteilhaft so gewählt, dass der Rotationswinkel der Sensormittel an der zweiten Achse über einen Bereich von nahezu bis zu 360° reicht. Die Kopplung der beiden Achsen ist vorzugsweise über eine Verzahnungsgeometrie bewirkbar, die am Schalthebel mit der ersten Achse und korrespondierend dazu an den Sensormittel der zweiten Achse angebracht ist.

Diese vorgeschlagene voll redundante magnetoelektrische Detektion von Schalterstellungen des Schalterhebels ist damit für sicherheitsrelevante Anwendungen in einem Kraftfahrzeug vorteilhaft anwendbar, da sie eine Einheit aufweist, die einen Magneten um eine Achse abhängig von der Hebelstellung bewegt und eine separate Einheit zur Detektion der Magnetfeldrichtung (oder auch linear bewegt und nicht nur rotatorisch) aufweist. Um eine noch höhere Redundanz zu erreichen, können auch mehrere Einheiten zur Detektion der Magnetfeldrichtung eingesetzt werden.

Die berührungslos arbeitenden Sensormittel sind dabei auf einfache Weise an der zweiten drehbaren Achse angeordnet, die mit der ersten Achse rotatorisch gekoppelt ist, und die mechanisch direkt kontaktierbaren Sensormitteln sind an der ersten und/oder der zweiten Achse angeordnet.

Der ortsfeste Magnetfeldsensor ist vorzugsweise ein Hall-Element. Die berührungslos arbeitenden Sensormittel können aber auch aus hinlänglich bekannten optoelektronischen Bauteilen bestehen. Die direkt kontaktierbaren Sensormittel können, wie erwähnt, auch durch digitale magnetische oder optoelektronische Sensoren ersetzt werden.

Das erfindungsgemäße Schaltermodul kann in vorteilhafter Weise an einem Lenkstockschalter zur Auswahl vorgegebener Funktionen, wie zum Beispiel Blinkerstellung, Scheinwerferauswahl, Getriebefunktionen oder ähnlichem, bei einem Fahrzeug angeordnet werden.

Durch die erfindungsgemäße Kombination mehrere Sensormittel sind zum Beispiel weniger Signalleitungen zu einem auswertenden Mikrokontroller notwendig als bei einer rein digitalen Auswertung. Es ist auch eine sehr robuste Detektion möglich, mit einer Erfüllung hoher Sicherheitsanforderungen (Fehlersicherheit) durch volle Redundanz und Diversität mit mindestens zwei verschiedenen physikalischen Prinzipien.

### Kurze Beschreibung der Zeichnung

Ausführungsbeispiele der Erfindung werden anhand der Figuren der Zeichnung erläutert. Es zeigen:
Figur 1 eine prinzipielle Seitenansicht eines Lenkstockschalters als Schaltermodul mit zwei Sensormitteln,
Figur 2 eine Draufsicht auf die Anordnung nach der Figur 1,
Figur 3 eine prinzipielle Seitenansicht eines zweiten Ausführungsbeispiels des Lenkstockschalters als Schaltermodul mit zwei Sensormitteln und
Figur 4 eine Draufsicht auf die Anordnung nach der Figur 3.

### Wege zur Ausführung der Erfindung

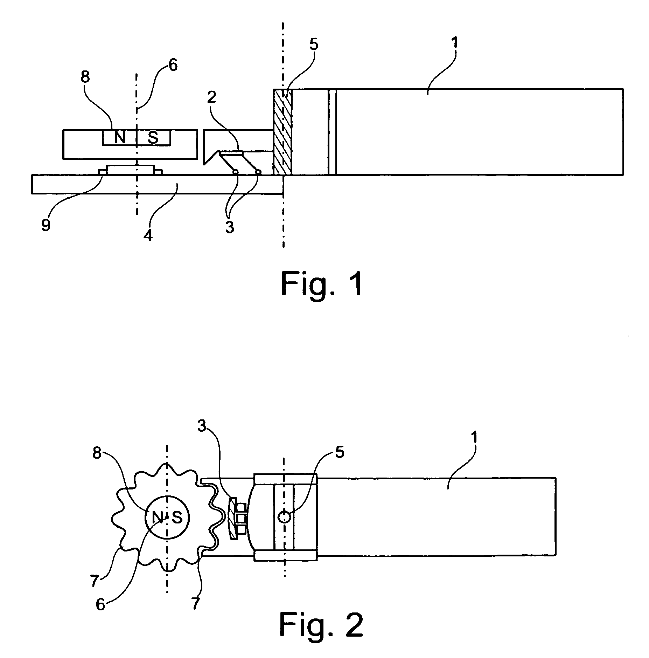

Figur 1 zeigt eine Seitenansicht eines Lenkstockschalters als Schaltermodul mit einem Schalthebel 1, der über mechanisch direkt kontaktiere Sensormitteln in Form von Schleifkontakten 2 verfügt, die mit Leiterbahnen 3 auf einer Leiterbahnplatte 4 kontaktieren können. Figur 2 zeigt die gleiche Anordnung in einer Draufsicht.

Der Schalthebel 1 ist dabei um eine erste Achse 5 drehbar gelagert. Auf einer zweiten drehbaren Achse 6 sind weitere Sensormittel angeordnet, die mit der ersten Achse 5 rotatorisch gekoppelt sind. Diese Kopplung der beiden Achsen 5 und 6 erfolgt über eine Verzahnungsgeometrie 7, die an einer Fortsetzung des Schalthebels 1 mit der ersten Achse 5 und korrespondierend dazu an den Sensormittel der zweiten Achse 6 angebracht ist.

Die um die zweite drehbare Achse 6 angebrachten berührungslos arbeitenden Sensormittel bestehen aus einem durch eine Bewegung des Schalthebels 1 über die Übersetzung bzw. Kopplung der beiden Achsen 5 und 6 rotatorisch bewegten Magneten 8 und einem ortsfestem Magnetfeldsensor 9, wobei der Magnet 8 derart mit seinem Nor- und Südpol (N/S) polarisiert ist, dass die rotatorische Bewegung des Magneten 8 zu einer Richtungs- und/oder Feldstärkeänderung im Magnetfeldsensor 9 führt.

Diese detektierten Änderungen können als Signale in einer hier nicht näher erläuterten elektronischen Schaltung als Steuersignale für Funktionen im Fahrzeug ausgewertet werden. Die rotatorischen Bewegung des Schalthebels 1 werden somit hier durch einen Zahnradausschnitt der Hebelaufnahme auf ein Zahnrad mit dem integriertem Magneten 8 übertragen. Das sich dadurch bewegende Magnetfeld wird durch den magnetoelektrischen Magnetfeldsensor 9 detektiert und in ein elektrisches Signal umgewandelt. Dieses Signal kann dann z.B., durch einen Mikrocomputer interpretiert werden.

Die Übersetzung von der ersten Achse 5 zur zweiten Achse 6 ist dabei so gewählt, dass der Rotationswinkel der Sensormittel an der zweiten Achse 6 über einen Bereich von nahezu bis zu 360° reicht.

Die auf der ortsfest angebrachten Leiterbahnplatte 4 befindlichen Leiterbahnen 3 ermöglichen somit die durch eine Bewegung des Schalthebels 1 rotatorisch bedingten Verbindungen zu den Schleifkontakten 2, wobei vorgegebene Geometrien der Leiterbahnen 3, hier entsprechend der Kreisbahn der Bewegung des Schalthebels 1, bei bestimmten Stellungen des Schalthebels 1 durch die Schleifkontakte 2 kontaktierbar sind.

Zur digitalen Auswertung der Stellung des Schalthebels 1 werden je nach der Anzahl der Stellungen eine unterschiedliche Anzahl an einzelnen Sensoren benötigt. Zudem ist es vorteilhaft, wenn die Codierung so ausgeführt ist, dass immer nur eine Änderung an einem Bit pro Schalterstellungsänderung erzeugt wird. Ein Beispiel einer möglichen Zuordnung der Stellung des Schalthebels 1 zu der Anzahl der Sensoren und der möglichen Codierungen ergibt sich wie folgt:

| Stellungen des Schalthebels 1 | Anzahl der digitalen Sensoren |
|---|---|
| 2 | 1 |
| 3 | 2 |
| 4 | 2 |
| 5 | 3 |
| 6 | 3 |
| 7 | 3 |
| 8 | 3 |

Beispiel einer Codierung von 5 Stellungen oder Stufen des Schalthebels 1:

| | | |
|---|---|---|
| Stufe +2 | ergibt | 001 |
| Stufe +1 | ergibt | 011 |
| Stufe 0 | ergibt | 010 |
| Stufe -1 | ergibt | 110 |
| Stufe -2 | ergibt | 100 |

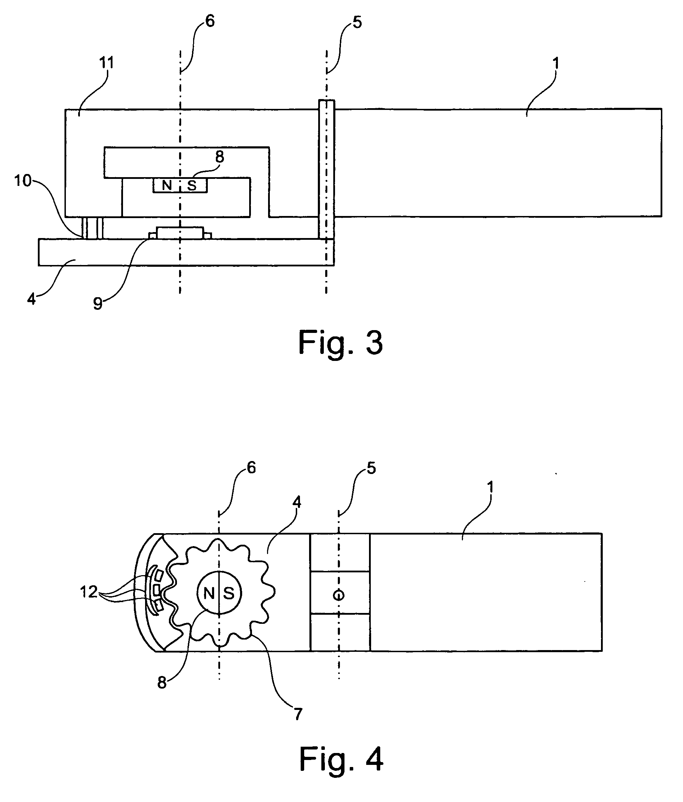

In Figur 3 in der Seitenansicht und Figur 4 in der Draufsicht ist ein weiteres Ausführungsbeispiel gezeigt, bei dem weitere Schleifkontakte 10 auf einem um die zweite Achse 6 drehenden Teil 11 angeordnet sind. Hierzu sind auf der Leiterbahnplatte 4 Leiterbahnen 12 angebracht, die hier entsprechend der Kreisbahn der Bewegung des drehenden Teils 11, bei bestimmten Stellungen des Schalthebels 1 durch die Schleifkontakte 10 kontaktierbar sind.

## Patentansprüche

1. Schaltermodul mit Sensormitteln zur Erkennung von Schaltpositionen, bei dem ein Schalthebel (1) in mindestens einem Freiheitsgrad bewegbar ist und die Bewegung mit den Sensormitteln derart detektierbar ist, dass daraus Schaltsignale erzeugbar sind, wobei die Sensormittel aus einer redundanten Kombination von Sensormitteln zusammengesetzt sind, **dadurch gekennzeichnet, dass** die Sensormittel aus einer redundanten Kombination von berührungslos und mechanisch direkt kontaktierten analogen und/oder digitalen Sensormitteln zusammengesetzt sind, wobei die mechanisch direkt kontaktierbaren Sensormitteln aus auf einer ortsfesten Leitplatte (4) angebrachten Leiterbahnen (3) und aus durch eine Bewegung des Schalthebels (1) rotatorisch bewegten Schleifkontakten (2) bestehen, wobei vorgegebene Geometrien der Leiterbahnen (3) bei bestimmten Stellungen des Schalthebels (1) durch die Schleifkontakte (2) kontaktierbar sind.

2. Schaltermodul nach Anspruch 1, **dadurch gekennzeichnet, dass** die digitalen Sensormittel aus mechanisch direkt kontaktierbaren Sensormitteln oder berührungslos arbeitenden magnetischen oder optischen Sensormittel bestehen.

3. Schaltermodul nach Anspruch 1 oder 2, **dadurch gekennzeichnet, dass** die berührungslos arbeitenden Sensormittel aus einem durch eine Bewegung des Schalthebels (1) rotatorisch bewegten Magneten (8) und einem ortsfestem Magnetfeldsensor (9) bestehen, wobei der Magnet (8) derart polarisiert ist, dass die rotatorische Bewegung des Magneten (8) zu einer Richtungs- und/oder Feldstärkeänderung im Magnetfeldsensor (9) führt.

4. Schaltermodul nach einem der vorhergehenden Ansprüche, **dadurch gekennzeichnet, dass** der Schalthebel (1) um eine erste Achse (5) drehbar gelagert ist und dass Sensormittel auf einer zweiten drehbaren Achse (6) angeordnet sind, die mit der ersten Achse (5) rotatorisch gekoppelt ist.

5. Schaltermodul nach Anspruch 4, **dadurch gekennzeichnet, dass** die Übersetzung von der ersten (5) zur zweiten Achse (6) so gewählt ist, dass der Rotationswinkel der Sensormittel an der zweiten Achse (6) über einen relativ großen Bereich, der nicht größer als 360° ist, reicht.

6. Schaltermodul nach Anspruch 4 oder 5, **dadurch gekennzeichnet, dass** die Kopplung der beiden Achsen (5,6) über eine Verzahnungsgeometrie (7) bewirkbar ist, die am Schalthebel (1) mit der ersten Achse (5) und korrespondierend dazu an den Sensormittel der zweiten Achse (6) angebracht ist.

7. Schaltermodul nach Anspruch 4, 5 oder 6, **dadurch gekennzeichnet, dass** die berührungslos arbeitenden Sensormittel an der zweiten drehbaren Achse (6) angeordnet sind, die mit der ersten Achse (5) rotatorisch gekoppelt ist, und an der ersten und/oder der zweiten Achse (5,6) digitale Sensormittel angeordnet sind, die mechanisch direkt kontaktiert sind.

8. Schaltermodul nach einem der Ansprüche 2 bis 7, **dadurch gekennzeichnet, dass** der ortsfeste Magnetfeldsensor (9) ein Hall-Element aufweist.

9. Schaltermodul nach einem der vorhergehenden Ansprüche, **dadurch gekennzeichnet, dass** das Schaltermodul an einem Lenkstockschalter zur Auswahl vorgegebener Funktionen bei einem Fahrzeug angeordnet ist.

## Claims

1. Switch module heaving sensor means for detecting switching positions, in which a switching lever (1) can be moved in at least one degree of freedom and the movement can be detected using the sensor means in such a manner that switching signals can be generated therefrom, the sensor means being composed of a redundant combination of sensor means, **characterized in that** the sensor means are composed of a redundant combination of contactless analogue and/or digital sensor means and analogue and/or digital sensor means with which direct mechanical contact is made, the sensor means with which direct mechanical contact can be made consisting of conductor tracks (3) fitted on a stationary printed circuit board (4) and of sliding contacts (2) which are rotationally moved by a movement of the switching lever (1), contact being able to be made with predefined geometries of the conductor tracks (3) in particular positions of the switching lever (1) by means of the sliding contacts (2).

2. Switch module according to Claim 1, **characterized in that** the digital sensor means consist of sensor means with which direct mechanical contact can be made or contactlessly operating magnetic or optical sensor means.

3. Switch module according to Claim 1 or 2, **characterized in that** the contactlessly operating sensor means consist of a magnet (8), which is rotationally moved by a movement of the switching lever (1), and a stationary magnetic field sensor (9), the magnet (8) being polarized in such a manner that the rotational movement of the magnet (8) changes the direction and/or field strength in the magnetic field sensor (9).

4. Switch module according to one of the preceding claims, **characterized in that** the switching lever (1) is rotatably amounted around a first shaft (5), and **in that** sensor means are arranged on a second rotatably shaft (6) which is rotationally coupled to the first shaft (5).

5. Switch module according to Claim 4, **characterized in that** the transmission ratio from the first shaft (5) to the second shaft (6) is selected in such a manner that the angle of rotation of the sensor means on the second shaft (6) extends over a relatively wide range which is not greater than 360°.

6. Switch module according to Claim 4 or 5, **characterized in that** the two shafts (5, 6) can be coupled via a toothing geometry (7) which is fitted to the switching lever (1) with the first shaft (5) and, in a manner corresponding thereto, to the sensor means of the second shaft (6).

7. Switch module according to Claim 4, 5 or 6, **characterized in that** the contactlessly operating sensor means are arranged on the second rotatable shaft (6) which is rotationally coupled to the first shaft (5), and digital sensor means with which direct mechanical contract is made are arranged on the first and/or the second shaft (5, 6).

8. Switch module according to one of Claims 2 to 7, **characterized in that** the stationary magnetic field sensor (9) has a Hall element.

9. Switch module according to one of the preceding claims, **characterized, in that** the switch module is arranged on a steering column switch for selecting predefined functions in a vehicle.

## Revendications

1. Module de computation muni de moyens de détection pour l'identification de positions de commutation, dans lequel un levier de commutation (1) peut se mouvoir dans au moins un degré de liberté et le mouvement peut être détecté avec les moyens de détection de manière à pourvoir générer à partir de là des signaux de computation, les moyens de détection étant composés d'une combinaison redondante de moyens de détection, **caractérisé en ce que**
les moyens de détention sont composés d'une combinaison redondante de moyens de détection analogiques et/ou numérique sans contact et contactés directement mécaniquement, les moyens de détection pouvant être contactés directement mécaniquement étant constitués de pistes conductrices (3) déposées sur un circuit imprimé (4) de position fixe et de contacts glissants (2) mus en rotation par un mouvement du levier de commutation (1), des géométries prédéfinies des pistes conductrices (3) pouvant être contractées par les contacts glissants (2) pour des positions définies du levier de commutation (1).

2. Module de commutation selon la revendication 1, **caractérisé en ce que** les moyens de détection numérique sont constitués de moyens de détection pouvant être contactés directement mécaniquement ou de moyens de détection magnétiques ou optiques fonctionnant sans contact.

3. Module de commutation selon la revendication 1 ou 2, **caractérisé en ce que** les moyens de détection fonctionnant sans contact sont constitués d'un aimant (8) mû en rotation par un mouvement du levier de commutation (1) et d'un détecteur de champ magnétique (9) de position fixe, l'aimant (8) étant polarisé de telle sorte que le mouvement en rotation de l'aimant (8) entraine une modification de la direction et/ou de l'intensité du champ dans le détecteur de champ magnétique (9).

4. Module de commutation selon une des revendications précédentes, **caractérisé en ce que** le levier de commutation (1) est monté sur un premier axe (5) de manière à pouvoir pivoter et **en ce que** des moyens de détection sont montés sur un deuxième axe (6) de manière à pouvoir pivoter, ce dernier étant couplé en rotation au premier axe (5).

5. Module de commutation selon la revendication 4, **caractérisé en ce que** le rapport de transmission du premier axe (5) au deuxième (6) est choisi de telle sorte que l'angle de rotation des moyens de détection sur le deuxième axe (6) permet l'accès à une plage relativement étendue qui ne dépasse pas 360°.

6. Module de commutation selon la revendication 4 ou 5, **caractérisé en ce que** l'accouplement des deux axes (5, 6) peut être opéré par l'intermédiaire d'une géométrie dentelée (7), qui est adaptée au levier de commutation (1) du premier axe (5) et de manière correspondante aux moyens de détection du deuxième axe (6).

7. Module de computation selon la revendication 4, 5 ou 6, **caractérisé en ce que** les moyens de détection fonctionnant sans contact sont disposés sur le deuxième axe (6), accouplé en rotation avec le premier axe (5), et des moyens de détection numérique sont disposés sur le premier et/ou le deuxième axe (5, 6), qui sont contractés directement mécaniquement.

8. Module de commutation selon une des revendications 2 à 7, **caractérisé en ce que** le détecteur de champ magnétique (9) de position fixe comporte un élément Hall.

9. Module de commutation selon une des revendications précédentes, **caractérisé en ce que** le module de commutation est disposé sur un commutateur de la colonne de direction pour la sélection de fonctions prédéfinies dans un véhicule.
